# EUROPÄISCHE PATENTSCHRIFT

(11) **EP 3 281 284 B1**
(45) Veröffentlichungstag und Bekanntmachung des Hinweises auf die Patenterteilung: **15.01.2020**
(21) Anmeldenummer: 16711777.9
(22) Anmeldetag: 24.03.2016
(51) Int. Cl.: H02K 5/22

(54) **ANSCHLUSSVERFAHREN UND -VORRICHTUNG ZUR KOSTENGÜNSTIGEN STEUERUNG EINES ELEKTRONIKMOTORS**
METHOD AND DEVICE FOR CONNECTION FOR COST-EFFECTIVE CONTROL OF AN ELECTRONIC MOTOR
PROCÉDÉ ET DISPOSITIF DE BRANCHEMENT POUR LA COMMANDE ÉCONOMIQUE D'UN MOTEUR ÉLECTRIQUE

(30) Priorität: 04.04.2015 DE 102015004470
(43) Veröffentlichungstag der Anmeldung: 14.02.2018
(73) Patentinhaber: AMK Holding GmbH & Co. KG, 73230 Kirchheim/Teck (DE)
(72) Erfinder: GAUSE, Alfred, 73666 Baltmannsweiler (DE)
(74) Vertreter: Spachmann, Holger
(86) Internationale Anmeldenummer: PCT/EP2016/000523
(87) Internationale Veröffentlichungsnummer: WO 2016/162110

(56) Entgegenhaltungen:
- EP-A1- 2 113 799
- DE-A1- 19 926 542
- DE-A1-102006 046 049
- DE-A1-102012 007 962
- DE-U1-202008 003 624
- SIEBERLING B: "MASSGESCHNEIDERTE ENERGIE- UND STEUERLEITUNGEN FUER ELEKTROANTRIEBE", ANTRIEBSTECHNIK, VEREINIGTE FACHVERLAGE, MAINZ, DE, Bd. 37, Nr. 11, 1. November 1998 (1998-11-01), Seite 54,56, XP000782796, ISSN: 0722-8546

## Beschreibung

Die Erfindung betrifft ein Anschlussverfahren zur kostengünstigen Steuerung eines Elektronikmotors mittels Einkabeltechnologie bei hoher Schutzart, wobei die an sich bekannte Steckverbindertechnik mit der an sich bekannten Klemmkastentechnik kombiniert wird, und das Einkabel mit Steckverbindern ohne hohe Schutzart vorkonfektioniert wird, und die Steckverbinder bei geöffnetem Klemmkasten des Elektronikmotors in zugehörige Buchsen eingesteckt werden, und das vorkonfektionierte Einkabel in eine in dem Klemmkasten ausgebildete, kombinierte Zugentlastungs- und Erdungsschale eingelegt und ein Klemmkastensockel mit einem Klemmkastendeckel fest verschlossen wird.

Große Teile des Maschinenbaus benötigen für Bewegungen in vielfacher Weise Antriebstechnik. Diese Tätigkeit wird heute überwiegend von Elektromotoren übernommen. Zur Steuerung derartiger elektrischer Servomotoren wird in der Regel eine Regelelektronik benötigt. Die Regelelektronik für die variable und dynamische Drehzahlverstellung derartiger Servomotoren ist dabei meist in einem elektrischen Schaltschrank zentral untergebracht, von wo aus die Elektromotoren über Kabelverbindungen angesteuert werden.

Zunehmend wird aber die Steuerelektronik auch dezentral gehandhabt und dazu in die Elektromotoren integriert. Aufgrund der typischen Umgebungsbedingungen an deren Einsatzorten sind hohe Schutzarten, zum Beispiel IPx5+, für die Elektronik und die Motoren gefordert. Die Anschlusstechnik erfolgt daher bei solchen Antriebslösungen vorwiegend in Klemmkastentechnik und PG-Verschraubungen oder Steckverbindungen mit hoher Schutzart. Beide Verbindungsarten haben ihre Vor- und Nachteile.

So ist die Steckverbindungstechnik von der Sache her sehr teuer, während bei Klemmkastenlösungen in der Regel eine umfangreiche Verdrahtung von unter Umständen vielen Adern vorzunehmen ist, die typischerweise aufwendig und Fehler behaftet sind.

Zunehmend kommen vermehrt Einkabellösungen mit sogenannten Hybridkabeln zum Einsatz, bei denen die Leistungsversorgung, die Elektronikversorgung und die Kommunikation oder Steuerung der Elektromotoren in einem Kabel zusammengeführt sind. Die Einzelverdrahtung der einzelnen Leiter wird dadurch noch aufwendiger und die Steckverbindung noch teurer, wenn die hohe Schutzart, wie zum Beispiel IPx5+, eingehalten werden muss.

Im Stand der Technik (DE 199 26 542 A1) sind unterschiedliche Anschlusslösungen in der Einkabel-Anschlusstechnik bekannt geworden. Die hierbei eingesetzten Einkabel weisen mehrere Leitungen auf, die von einem Isolator, in Form eines gemeinsamen Mantels, umhüllt sind. Die in einem derartigen Einkabel zusammengefassten einzelnen Leitungen oder Adern sind üblicherweise mit einem eigenen Mantel, der Adernisolierung versehen, die ihrerseits von dem Kabelmantel umhüllt werden. Zwischen dem gemeinsamen Kabelmantel und den einzelnen isolierten Leitungen ist in der Regel eine Abschirmung vorhanden. Eine derartige Abschirmung, die in Form eines Drahtgeflechts, eines Litzennetzes oder einer, die Leiter umhüllenden Metallfolie ausgebildet sein kann, stellt dann einen Schutzleiter (TE-Leiter) dar.

Eine derartige Abschirmung dient dazu, die elektromagnetische Verträglichkeit (EMV) des Kabels zu gewährleisten. Die Abschirmung sorgt dafür, dass sowohl auf das Kabel von außen einwirkende elektromagnetische Felder als auch von dem Kabel ausgehende elektromagnetische Felder so abgeschirmt werden, dass diese keine Störungen dadurch verursachen können, dass sie mit anderen Einrichtungen unkontrolliert wechselwirken oder vagabundierende elektromagnetische Felder in diese einstreuen.

Durch die DE 10 2006 046 049 A1 ist eine elektrische Maschine, insbesondere ein Elektromotor bekannt, die ein Anschlusskabel zumindest zur Energieversorgung der elektrischen Maschine aufweist. Bei der bekannten Lösung weist das Anschlusskabel zumindest eine von einem Kabelmantel umgebene Ader sowie ein freigelegtes Kabelende auf. Die elektrische Maschine weist ferner zumindest eine Aufnahme zur Zugentlastung des Anschlusskabels sowie einen elektrischen Anschluss zum Anschließen des Kabelendes auf. Das Anschlusskabel weist im Bereich des Kabelendes einen Crimpflansch mit einer Flanschhülse auf, die zwischen dem Kabelmantel und der zumindest einen Ader eingeschoben und mit einer auf dem Kabelmantel sowie über die Flanschhülse aufgeschobenen Crimphülse vercrimpt ist. Der so gebildete Crimpflansch ist mit dem darin befestigten Anschlusskabel in eine Aufnahme eingebracht. Die bekannte Lösung ist aufwendig in der Herstellung und mithin kostenintensiv in der Realisierung.

Aus der DE 20 2008 003624 U1 ist bekannt eine Anschlussvorrichtung zum Anschluss elektrischer Leiter an einen Elektromotor, umfassend ein Motorgehäuse mit einer kastenförmigen Aufnahme für die Motoranschlussvorrichtung. Die Aufnahme kann über eine Abdeckung verschlossen werden. In der Aufnahme befindet sich eine Mehrzahl an Buchsenleisten mit Anschlussbuchsen, an welche einzelne Anschlussleitungen des Elektromotors, wie beispielsweise Energieversorgungs-, Daten- oder Signalleitungen, mittels Klemmkontakten (WAGO-Steckverbindung) anschließbar sind. Eine Anschlussleitung ist dabei zunächst durch eine Zugentlastung zu führen und die einzelnen Adern müssen im Anschlusskasten einzeln kontaktiert werden.

Ausgehend von dem vorstehend genannten Stand der Technik besteht die Aufgabe der Erfindung darin, die Kosten bekannter Anschlusstechniken zur Steuerung eines Elektronikmotors mittels Einkabel zu senken unter gleichzeitiger Beibehaltung einer hohen Schutzart.

Eine dahingehende Aufgabe ist mit den Merkmalen des Anspruches 1 in seiner Gesamtheit gelöst sowie im Rahmen einer beanspruchten Anschlussvorrichtung gemäß der Merkmalsausgestaltung des Anspruches 8. Weitere vorteilhafte Ausgestaltungen der Erfindungen gehen aus den abhängigen Ansprüchen hervor.

Dadurch dass gemäß dem kennzeichnenden Teil des Patentanspruches 1 mit der Verschraubung des Klemmkastendeckels mit dem Klemmkastensockel die Steckverbinder in ihren Buchsen in dem Klemmkasten in Position gehalten werden, dass die aus Steckverbinder und Buchsen entstehende Verbindung in Anlehnung an die Printplatinentechnologie erfolgt, und dass das Einkabel ein Hybridkabel ist, bei dem die Leistungsversorgung, die Elektronikversorgung und die Kommunikation in einem Kabel zusammengefasst sind, sind die Kosten bekannter Anschlusstechniken zur Steuerung eines Elektromotors mittels Einkabel gesenkt unter gleichzeitiger Beibehaltung einer hohen Schutzart.

Bei der Anschlusstechnik nach der Erfindung sind die eingesetzten Einkabel an ihren Kabelenden mit Kontakteinrichtungen versehen, regelmäßig in Form von Steckern, die dazu dienen, mit einer komplementär ausgebildeten Buchse als Gegenstück zusammengesteckt zu werden und so die einzelnen Leitungen an andere Vorrichtungen, wie z.B. Leiterplatten, anschließen zu können.

Dazu bestehen die Kontakteinrichtungen aus Vater- und Mutterkontakten, die als Kontaktstifte bzw. Kontaktbuchsen ausgebildet und jeweils in Kontaktblöcken aus isolierendem Kunststoff zusammengefasst sein können.

Einzelheiten der Erfindung werden nachstehend anhand eines Ausführungsbeispiels in Verbindung mit den zugehörigen Zeichnungen näher beschrieben.

Von den Zeichnungen zeigt:
- Fig. 1: in perspektivischer Seitenansicht einen Servomotor mit zugeordnetem, aufgesetztem Anschlussgehäuse;
- Fig. 2: das Anschlussgehäuse von Fig. 1 als Sockel ohne Deckel und mit eingesetzter Verkabelung; und
- Fig. 3: in Draufsicht den Sockel des Anschlussgehäuses nach der Fig. 2 ohne Verkabelung.

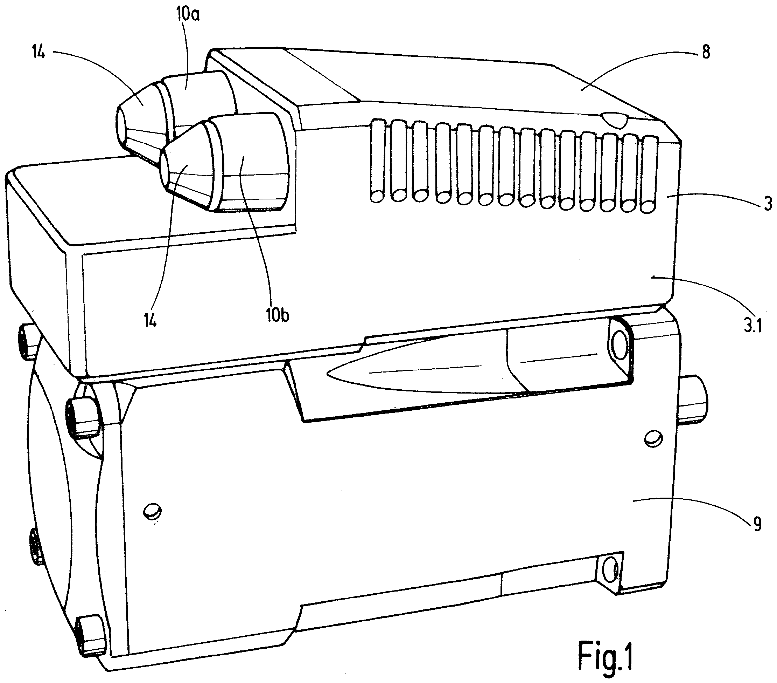

Das in Fig. 1 dargestellte Anschlussgehäuse 3 sitzt auf der Oberseite eines Servomotors 9 und ist in üblicher Weise mit diesem verbunden. Ferner besteht zwischen dem Servomotor 9 und dem Anschlussgehäuse 3 eine übliche, elektrische Kabelverbindung unter Einsatz von Einzelkabeln, die nicht näher dargestellt ist. Das Gehäuse 3 setzt sich aus einem unteren Klemmkastensockel 3.1 und einem oberen Klemmkastendeckel 8 zusammen. An der einen Seite des Anschlussgehäuses 3 sind zwei Kabeleingänge 10a bzw. 10b ausgebildet, um je ein Einkabel 1a bzw. 1b (in Fig. 1 nicht dargestellt) in das Innere des Anschlussgehäuses 3 führen zu können.

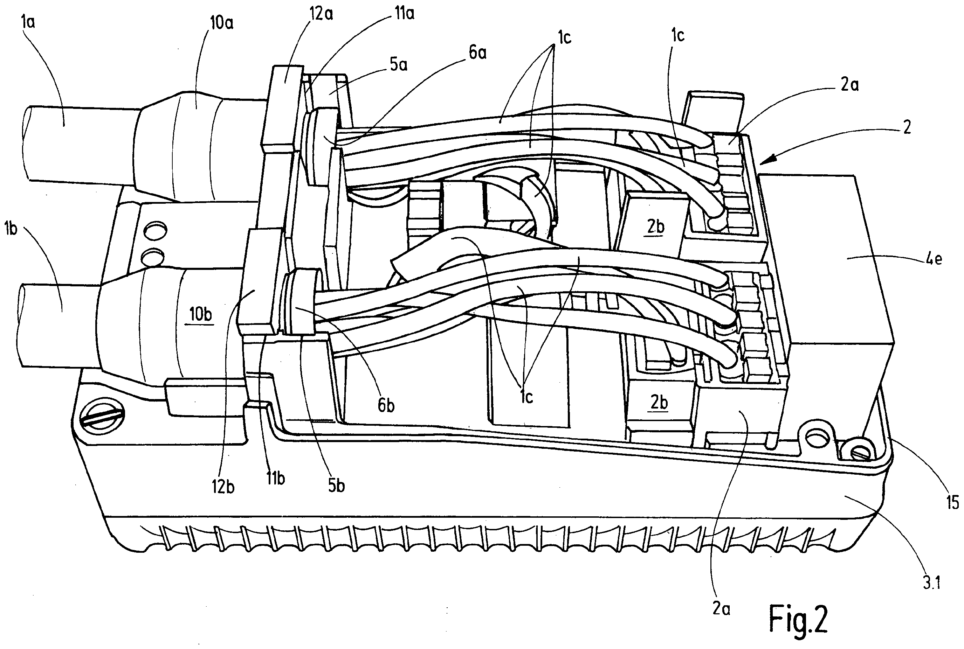

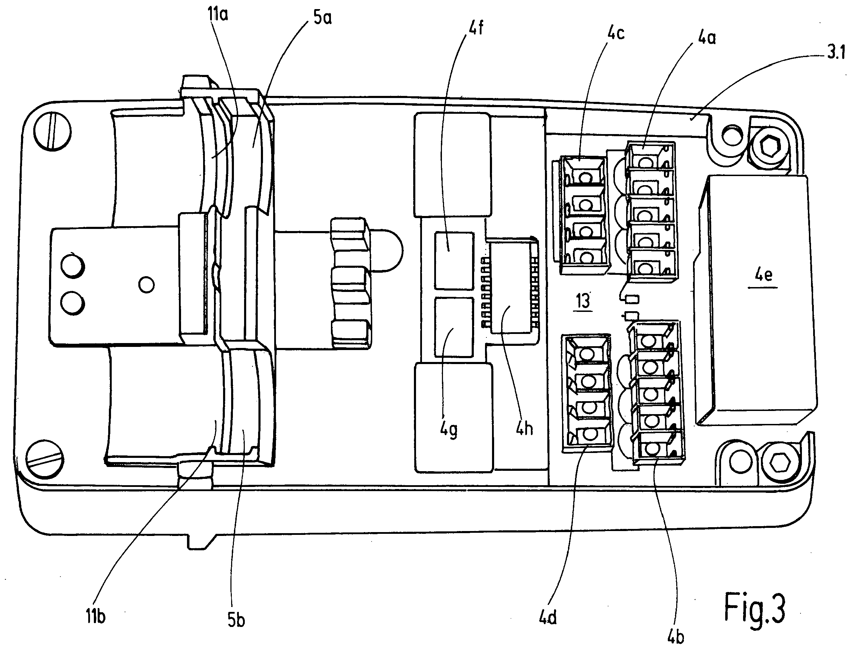

An den Kabeleingängen 10a bzw. 10b (Fig. 2 und 3) sind Aufnahmen 11a und 11b sowie 5a und 5b in dem Klemmkastensockel 3.1 und in korrespondierender Weise in dem Klemmkastendeckel 8 ausgebildet, die sich aus jeweils einer Halbschale in dem Klemmkastensockel 3.1 und einer spiegelbildlich dazu ausgebildeten Halbschale in dem Klemmkastendeckel 8 zusammensetzen, in die bei geöffnetem Anschlussgehäuse 3 je eines der Einkabel 1a bzw. 1b eingelegt und bei geschlossenem Anschlussgehäuse 3 in klemmender Weise festgesetzt werden können.

Zu diesem Zweck ist an den Einkabeln 1a und 1b jeweils ein Kopfteil 12a bzw. 12b aus einem Elastomerkunststoff oder einem anderen geeigneten Kunststoff angeformt, wobei das angeformte Kopfteil 12a bzw. 12b mit der zugehörigen Aufnahme 11a bzw. 11b, respektive mit den die Aufnahmen bildenden Halbschalen, abdichtend zusammenwirkt und gleichzeitig als Knickschutz dient.

Die zweite Aufnahme 5a und 5b, die sich ebenfalls aus jeweils spiegelbildlich in dem Klemmkastensockel 3.1 bzw. dem Klemmkastendeckel 8 ausgebildeten Halbschalen zusammensetzt, nimmt jeweils eine der Crimphülsen 6a bzw. 6b auf. Diese Crimphülsen 6a und 6b sind mechanisch und elektrisch fest mit der Schirmung der Einkabel 1a bzw. 1b verpresst und bilden neben einer mechanischen Zugentlastung gleichzeitig eine durchgehende, lückenlose Schirmung der Einkabel 1a und 1b in dem Anschlussgehäuse 3, das zu diesem Zweck aus einer im Druckgussverfahren hergestellten Aluminiumlegierung oder Zinkdruckguss besteht.

Am Ende der Einkabel 1a und 1b, an dem die einzelnen Leiter 1c aus der Ummantelung der Einkabel 1a, 1b austreten, sind Steckverbindungen 2 angebracht und in Kunststoffboxen 2a, b angeordnet, was mittels Vorkonfektionierung kostengünstig erfolgen kann (Fig. 2).

Am anderen Ende des Innenraums des Anschlussgehäuses 3 ist eine in Printplatinentechnik hergestellte Leiterplatte 13 befestigt (Fig. 3) mit einer ersten Reihe von Buchsen 4a bzw. 4b, die dem Anschluss der Hochspannungsversorgung (400 V bis 800 V) dient. Eine zweite Reihe von Buchsen 4c und 4d auf der Leiterplatte 13 sorgt für den 24V Niederspannungsanschluss. Ferner ist im Klemmkastensockel 3.1 ein Kondensatorblock 4e eingesetzt sowie wiederum mit den Einkabeln 1a, 1b elektrisch verbindbare Feldbusse 4f bzw. g und ein Adressschalter 4h für die Anwahl des jeweiligen Feldbusses 4f und 4g. Die Verhältnisse sind in der Fig. 3 gut erkennbar; da dort die in Fig. 2 dargestellte Verkabelung noch nicht eingesetzt ist.

Die mit Steckern vorkonfektionierten Steckeranschlüsse niedriger Schutzart sind in Kunststoffboxen 2a bzw. 2b zusammengefasst. Durch Zusammenstecken der Kunststoffboxen 2a und 2b mit den auf der Leiterplatte 13 befestigten Buchsenreihen 4a,b bzw. 4c,d ergibt sich nach Aufsetzen des Klemmkastendeckels 8 auf den Klemmkastensockel 3.1 und Verschrauben beider Teile ein kostengünstiger Anschluss hoher Schutzart. Mit dem Aufsetzen und Verschrauben des Klemmkastendeckels 8 auf dem Klemmkastensockel 3.1 werden die Stecker in dem Klemmkasten in Position gehalten und gleichzeitig wird eine hohe Schutzart der Gesamtanordnung 1 bis 13 erreicht.

In dem vorstehend beschriebenen Anschlussgehäuse 3 lassen sich bedarfsweise noch weitere Verbindungen und Schaltelemente mit kontaktierbaren Anschlüssen (nicht dargestellt) unterbringen bei weiterhin hoher Schutzart.

## Patentansprüche

1. Anschlussverfahren zur kostengünstigen Steuerung eines Elektronikmotors (9) mittels Einkabeltechnologie bei hoher Schutzart, wobei die an sich bekannte Steckverbindertechnik mit der an sich bekannten Klemmkastentechnik (3) kombiniert wird, und das Einkabel (1) mit Steckverbindern ohne hohe Schutzart vorkonfektioniert wird, und die Steckverbinder (2) bei geöffnetem Klemmkasten (3) des Elektronikmotors (9) in zugehörige Buchsen (4) eingesteckt werden, und das vorkonfektionierte Einkabel (1) in eine in dem Klemmkasten (3) ausgebildete, kombinierte Zugentlastungs- (11) - und Erdungsschale (5) eingelegt und ein Klemmkastensockel (3.1) mit einem Klemmkastendeckel (8) fest verschlossen wird, **dadurch gekennzeichnet, dass** mit der Verschraubung des Klemmkastendeckels (8) mit dem Klemmkastensockel (3.1) die Steckverbinder (2) in ihren Buchsen (4) in dem Klemmkasten (3) in Position gehalten werden, dass die aus Steckverbinder (2) und Buchsen (4) entstehende Verbindung in Anlehnung an die Printplatinentechnologie erfolgt, wobei am Ende des Einkabels (1a, 1b), an dem einzelne Leiter aus einer Ummantelung des Einkabels (1a, 1b) austreten, die Steckverbinder (2) angebracht und in Kunststoffbuchsen (2a, 2b) in einem 90°-Winkel zur Längserstreckung des Einkabels (1a bzw. 1b) angeordnet sind, und wobei am anderen Ende des Innenraums des Klemmkastens (3) eine in Printplatinentechnik hergestellte Leiterplatte (13) mit einer ersten Buchsenreihe (4a, 4b) für den Anschluss einer Hochspannungsversorgung (400 V bis 800 V) und eine zweite Buchsenreihe (4c, 4d), für den Anschluss einer 24V Niederspannungsanschluss angeordnet ist, die näher an der kombinierten Zugentlastungs- (11) und Erdungsschale (5) liegt, und dass das Einkabel (1) ein Hybridkabel ist, bei dem die Leistungsversorgung, die Elektronikversorgung und die Kommunikation in einem Kabel zusammengefasst sind.

2. Verfahren nach Anspruch 1, **dadurch gekennzeichnet, dass** die mit Steckern vorkonfektionierten Steckeranschlüsse niedriger Schutzart in Kunststoffboxen (2a, 2b) zusammengefasst sind.

3. Verfahren nach einem der vorstehenden Ansprüche, **dadurch gekennzeichnet, dass** die Abschirmung des Einkabels (1) mit einer elektrisch leitenden Crimphülse (6) verpresst und mit dieser in die an dem Klemmkasten (3) ausgebildete Erdungsschale (5) eingelegt wird.

4. Verfahren nach einem der vorangehenden Ansprüche, **dadurch gekennzeichnet, dass** der Klemmkasten (3) elektrisch leitend ausgebildet wird.

5. Verfahren nach einem der vorstehenden Ansprüche, **dadurch gekennzeichnet, dass** durch die Weiterführung der Abschirmung des Einkabels (1) in dem Klemmkasten (3) eine hohe Schutzart des Gesamtsystems erreicht wird.

6. Verfahren nach einem der vorstehenden Ansprüche, **dadurch gekennzeichnet, dass** das Einkabel (1) ein Hybridkabel ist.

7. Verfahren nach einem der vorstehenden Ansprüche, **dadurch gekennzeichnet, dass** eine verbreitete Printplatinentechnik zum Einsatz kommt.

8. Anschlussvorrichtung bei einem Elektronikmotor (9) zur Durchführung der Verfahren nach einem oder mehreren der Ansprüche 1 bis 7 für den Anschluss eines Einkabels (1), umfassend einen geteilten, metallischen Klemmkasten (3, 8) bei einem Elektronikmotor (9) zum Anschluss des als Hybridkabel ausgeführten Einkabels (1), bei dem die Leistungsversorgung, die Elektronikversorgung und die Kommunikation in einem Kabel zusammengefasst sind und bei dem am Ende des Einkabels (1a, 1b), an dem einzelne Leiter aus einer Ummantelung des Einkabels (1a, 1b) austreten, Steckverbinder (2) angebracht und in Kunststoffbuchsen (2a, 2b) in einem 90°-Winkel zur Längserstreckung des Einkabels (1a bzw. 1b) angeordnet sind, wenigstens eine in dem Klemmkastensockel (3.1) und in dem Klemmkastendeckel (8) ausgebildete Aufnahmen (5, 11) für wenigstens eine mechanisch und elektrisch mit der Schirmung des Einkabels (1) verbundene Crimphülse (6), eine Mehrzahl an Buchsen (4) in dem Klemmkasten (3), in die vorkonfektionierte Steckverbinder (2) des Einkabels (1) eingesteckt werden, wobei am den Aufnahmen (5, 11) gegenüberliegenden Ende des Innenraums des Klemmkastens (3) eine in Printplatinentechnik hergestellte Leiterplatte (13) mit einer ersten Buchsenreihe (4a, 4b) für den Anschluss einer Hochspannungsversorgung (400 V bis 800 V) und eine zweite Buchsenreihe (4c, 4d) für den Anschluss einer 24V Niederspannungsanschluss angeordnet ist, wobei die zweite Buchsenreihe (4c, 4d) näher an der kombinierten Zugentlastungs- (11) und Erdungsschale (5) als die ersten Buchsenreihe (4a, 4b) liegt, und wobei die Steckverbinder (2) keine hohe Schutzart aufzuweisen brauchen, um eine hohe Schutzart des Gesamtsystems zu erreichen, nachdem der metallische Klemmkastendeckel (8) fest mit dem metallischen Klemmkastensocke I (3.1) verschraubt ist, und wobei mit der Verschraubung des Klemmkastendeckels (8) mit dem Klemmkastensockel (3.1) die Steckverbinder (2) in ihren Buchsen (4) in dem Klemmkasten (3) in Position gehalten werden.

9. Anschlussvorrichtung nach Anspruch 8, **dadurch gekennzeichnet, dass** durch den aufgesetzten Klemmkastendeckel (8) die Stecker (2) mit ihrem Sitz in den Buchsen (4) in dem Klemmkasten (3) in Position gehalten werden.

10. Anschlussvorrichtung nach Anspruch 8 oder 9, **dadurch gekennzeichnet, dass** durch das Zusammenwirken der Crimphülse (6) des Einkabels (1) mit der in dem Klemmkastensockel (3.1) ausgebildeten Aufnahme (5) und der in dem Klemmkastendeckel (8) spiegelbildlich dazu ausgebildeten Aufnahme für die Crimphülse (6), bei aufgesetztem Klemmkastendeckel (8) neben einer durchgehenden Schirmung eine Erdung für das jeweilige Einkabel (1) erfolgt.

11. Anschlussvorrichtung nach einem der Ansprüche 8 bis 10, **dadurch gekennzeichnet, dass** der Elektronikmotor (9) zur dezentralen Steuerung mit integrierter Elektronik ausgerüstet ist.

12. Anschlussvorrichtung nach Anspruch 8, **dadurch gekennzeichnet, dass** die Crimphülse (6) aus Messing besteht.

13. Anschlussvorrichtung nach einem der Ansprüche 8 bis 12, **dadurch gekennzeichnet, dass** an dem Einkabel (1) ein Elastomerköpfteil (12a, 12b) angeformt ist, das zur Abdichtung des Klemmkastens (3, 8) mit dem eingangsseitigen Zugang des Klemmkastens (3) dichtend zusammenwirkt.

14. Anschlüssvorrichtung nach einem der Ansprüche 8 bis 13, **dadurch gekennzeichnet, dass** der Klemmkasten (3) durch eine umlaufende Dichtung (15) zwischen dem Klemmkastensockel (3.1) und dem Klemmkastendeckel (8) gegen die Umgebung abgedichtet ist.

15. Anschlussvorrichtung nach einem der Ansprüche 8 bis 14, **dadurch gekennzeichnet, dass** der Klemmkasten (3) mit seinen Komponenten (3.1 und 8) aus Aluminium- oder Zinkdruckguss besteht.

## Claims

1. Connection method for inexpensive control of an electronic motor (9) by means of single cable technology with high protection class, where the plug connector technology known per se is combined with the terminal box technology (3) known per se, and the single cable (1) is ready-made with plug connectors without high protection class, and the plug connectors (2) are inserted, with said terminal box (3) of said electronic motor (9) opened, into associated sockets (4), and said ready-made single cable (1) is placed into a combined strain relief (11) and earthing shell (5) provided in said terminal box (3), and a terminal box base (3.1) is firmly closed with a terminal box cover (8), **characterized in that** said plug connectors (2) are kept in position in their sockets (4) inside said terminal box (3) by the screw connection of said terminal box cover (8) to said terminal box base (3.1), **in that** the connection resulting from said plug connectors (2) and said sockets (4) is based on printed circuit board technology, where at the end of said single cable (1a, 1b), at which individual conductors exit a sheath of said single cable (1a, 1b), the plug connectors (2) are attached and arranged inside plastic boxes (2a, 2b) at a 90° angle to the longitudinal extent of said single cable (1a, 1b), and where at the other end of the interior of the terminal box (3) a printed circuit board (13) manufactured by printed circuit board technology is arranged with a first row of sockets (4a, 4b) for connection of a high-voltage supply (400 V to 800 V) and a second row of sockets (4c, 4d), for connection of a 24V low-voltage supply, and is closer to the combined strain relief (11) and earthing shell (5), and **in that** said single cable (1) is a hybrid cable in which the power supply, the electronics supply and the communication are combined in one cable.

2. Method according to claim 1, **characterized in that** the plug connections of low protection class ready-made with plugs are combined in plastic boxes (2a, 2b).

3. Method according to one of the above claims, **characterized in that** the shielding of the single cable (1) is compressed with an electrically conducting crimp sleeve (6) and is placed therewith into the earthing shell (5) provided on the terminal box (3).

4. Method according to one of the preceding claims, **characterized in that** the terminal box (3) is designed electrically conducting.

5. Method according to one of the above claims, **characterized in that** a high protection class of the overall system is achieved by continuing the shielding of the single cable (1) inside the terminal box (3).

6. Method according to one of the above claims, **characterized in that** the single cable (1) is a hybrid cable.

7. Method according to one of the above claims, **characterized in that** a widespread printed circuit board technology is used.

8. Connection device in an electronic motor (9) for performing the methods according to one or more of claims 1 to 7 for connection of a single cable (1), comprising a split, metallic terminal box (3, 8) on an electronic motor (9) for connection of said single cable (1) designed as a hybrid cable in which the power supply, the electronics supply and the communication are combined in one cable and in which at the end of said single cable (1a, 1b), at which individual conductors exit a sheath of said single cable (1a, 1b), plug connectors (2) are attached and arranged inside plastic sockets (2a, 2b) at a 90° angle to the longitudinal extent of said single cable (1a or 1b), by at least one receptacle (5, 11) provided in the terminal box base (3.1) and in the terminal box cover (8) for at least one crimp sleeve (6) mechanically and electrically connected to the shielding of the single cable (1), by a plurality of sockets (4) in said terminal box (3) into which ready-made plug connectors (2) of said single cable (1) are inserted, where at that end of the interior of said terminal box (3) opposite said receptacles (5, 11) a printed circuit board (13) manufactured by printed circuit board technology is arranged with a first row of sockets (4a, 4b) for connection of a high-voltage supply (400 V to 800 V) and a second row of sockets (4c, 4d) for connection of a 24V low-voltage supply, where said second row of sockets (4c, 4d) is closer to the combined strain relief (11) and earthing shell (5) than said first row of sockets (4a, 4b), and where said plug connectors (2) do not need to have a high protection class to achieve a high protection class of the overall system after said metallic terminal box cover (8) has been firmly screwed to said metallic terminal box base (3.1), and where said plug connectors (2) are kept in position inside their sockets (4) in said terminal box (3) by the screw connection of said terminal box cover (8) to said terminal box base (3.1).

9. Connection device according to claim 8, **characterized in that** the plugs (2) are held in position seated in the sockets (4) in the terminal box (3) by the fitted terminal box cover (8).

10. Connection device according to claim 8 or 9, **characterized in that** by the interaction of the crimp sleeve (6) of the single cable (1) with the receptacle (5) provided in the terminal box base (3.1) and with the receptacle for said crimp sleeve (6) provided as a mirror image thereof in the terminal box cover (8), earthing for the respective single cable (1) is achieved in addition to continuous shielding when said terminal box cover (8) is fitted.

11. Connection device according to one of claims 8 to 10, **characterized in that** the electronic motor (9) is equipped for decentralized control with integrated electronic unit.

12. Connection device according to claim 8, **characterized in that** the crimp sleeve (6) consists of brass.

13. Connection device according to one of claims 8 to 12, **characterized in that** an elastomer top part (12a, 12b) is integrally moulded onto the single cable (1) that interacts with the input-side access of the terminal box (3) in a sealing manner in order to seal said terminal box (3, 8).

14. Connection device according to one of claims 8 to 13, **characterized in that** the terminal box (3) is sealed against the environment by an all-round seal (15) between the terminal box base (3.1) and the terminal box cover (8).

15. Connection device according to one of claims 8 to 14, **characterized in that** the terminal box (3) with its components (3.1 and 8) consists of die-cast aluminium or zinc.

## Revendications

1. Procédé de raccordement pour la commande économique d'un moteur électronique (9) au moyen d'une technologie de câble unique pour un indice de protection élevé, sachant que la technique connue de connexion enfichable est combinée à la technique connue de boîte à bornes (3), et que le câble unique (1) est préconfectionné avec des connecteurs enfichables sans indice de protection élevé, et que les connecteurs enfichables (2) sont enfichés dans des douilles (4) correspondantes lorsque la boîte à bornes (3) du moteur électronique (9) est ouverte, et que le câble unique (1) préconfectionné est inséré dans une coque combinée de décharge de traction (11) et de mise à la terre (5), constituée dans la boîte à bornes (3) et qu'un socle de boîte à bornes (3.1) est fermé solidement par un couvercle de boîte à bornes (8), **caractérisé en ce que** les connecteurs enfichables (2) sont maintenus en place dans leurs douilles (4) dans la boîte à bornes (3) au moyen du vissage du couvercle de boîte à bornes (8) avec le socle de boîte à bornes (3.1), que la connexion formée par les connecteurs enfichables (2) et les douilles (4) a lieu en s'inspirant de la technologie des circuits imprimés, sachant qu'à l'extrémité du câble unique (1a, 1b) sur laquelle des conducteurs individuels sortent d'une gaine du câble unique (1a, 1b), des connecteurs enfichables (2) sont installés et disposés dans des douilles en plastique (2a, 2b) à un angle de 90° par rapport à l'extension longitudinale du câble unique (1a ou 1b), et sachant qu'à l'autre extrémité de l'espace intérieur de la boîte à bornes (3), une carte imprimée (13) conçue selon la technique des circuits imprimés et dotée d'une première rangée de douilles (4a, 4b) est disposée pour le raccordement d'une alimentation haute tension (entre 400 V et 800 V) et qu'une seconde rangée de douilles (4c, 4d) est disposée pour le raccordement à une prise basse tension de 24 V, laquelle seconde rangée est plus proche de la coque combinée de décharge de traction (11) et de mise à la terre (5) et que le câble unique (1) est un câble hybride pour lequel l'alimentation en puissance, l'alimentation électronique et la communication sont regroupées dans un câble.

2. Procédé selon la revendication 1, **caractérisé en ce que** les raccords de connecteurs d'indice de protection faible et préconfectionnés avec des connecteurs sont regroupés dans des boîtes en plastique (2a, 2b).

3. Procédé selon une des revendications précédentes, **caractérisé en ce que** le blindage du câble unique (1) est pressé avec un manchon de sertissage conducteur d'électricité (6) et est inséré avec celui-ci dans la coque de mise à la terre (5) constituée au niveau de la boîte à bornes (3).

4. Procédé selon une des revendications précédentes, **caractérisé en ce que** la boîte à bornes (3) est conductrice d'électricité.

5. Procédé selon une des revendications précédentes, **caractérisé en ce que** qu'un indice de protection élevé du système global est atteint par le prolongement du blindage du câble unique (1) dans la boîte à bornes (3).

6. Procédé selon une des revendications précédentes, **caractérisé en ce que** le câble unique (1) est un câble hybride.

7. Procédé selon une des revendications précédentes, **caractérisé en ce qu'**une technique répandue de circuits imprimés est employée.

8. Dispositif de raccordement sur un moteur électronique (9) pour réaliser les procédés selon une ou plusieurs des revendications 1 à 7 pour le raccordement d'un câble unique (1), comprenant une boîte à bornes (3, 8) métallique, divisée sur un moteur électronique (9) pour le raccordement du câble unique (1) conçu comme câble hybride pour lequel l'alimentation en puissance, l'alimentation électronique et la communication sont regroupées dans un câble et pour lequel à l'extrémité du câble unique (1a, 1b) sur laquelle des conducteurs individuels sortent d'une gaine du câble unique (1a, 1b), des connecteurs enfichables (2) sont installés et disposés dans des douilles en plastique (2a, 2b) à un angle de 90° par rapport à l'extension longitudinale du câble unique (1a ou 1b), au moins un logement (5, 11) constitué dans le socle de la boîte à bornes (3.1) et dans le couvercle de la boîte à bornes (8) pour au moins un manchon de sertissage (6) relié mécaniquement et électriquement au blindage du câble unique (1), une pluralité de douilles (4) dans la boîte à bornes (3) dans laquelle pluralité sont enfichés des connecteurs enfichables (2) préconfectionnés du câble unique (1), sachant qu'à l'extrémité opposée aux logements (5, 11), de l'espace intérieur de la boîte à bornes (3) est disposée une carte imprimée (13) fabriquée selon la technique des circuits imprimés avec une première rangée de douilles (4a, 4b) pour le raccordement d'une alimentation haute tension (entre 400 v et 800 V) et une seconde rangée de douilles (4c, 4d) pour le raccordement d'une prise basse tension de 24 V, sachant que la seconde rangée de douilles (4c, 4d) est plus proche de la coque combinée de décharge de traction (11) et de mise à la terre (5) que la première rangée de douilles (4a, 4b), et sachant que les connecteurs enfichables (2) n'ont pas besoin de présenter un indice de protection élevé pour atteindre l'indice de protection élevé du système global après que le couvercle métallique de la boîte à bornes (8) est vissé solidement au socle métallique de la boîte à bornes (3.1), et sachant que les connecteurs enfichables (2) sont maintenus en place dans leurs douilles (4) dans la boîte à bornes (3) au moyen du vissage du couvercle de la boîte à bornes (8) au socle de la boîte à bornes (3.1).

9. Dispositif de raccordement selon la revendication 8, **caractérisé en ce que** les connecteurs (2) sont maintenus en place dans leur logement dans les douilles (4) dans la boîte à bornes (3) par le biais du couvercle (8) posé sur la boîte à bornes.

10. Dispositif de raccordement selon la revendication 8 ou 9, **caractérisé en ce qu'**outre le blindage continu a lieu une mise à la terre du câble unique (1) respectif par le biais de l'interaction entre le manchon de sertissage (6) du câble unique (1) et le logement (5) constitué dans le socle de la boîte à bornes (3.1) et le logement pour le manchon de sertissage (6) constitué symétriquement dans le couvercle de la boîte à bornes (8), lorsque le couvercle de la boîte à bornes (8) est mis.

11. Dispositif de raccordement selon une des revendications 8 à 10, **caractérisé en ce que** le moteur électronique (9) pour la commande décentralisée est équipé d'un système électronique intégré.

12. Dispositif de raccordement selon la revendication 8, **caractérisé en ce que** le manchon de sertissage (6) est constitué de laiton.

13. Dispositif de raccordement selon une des revendications 8 à 12, **caractérisé en ce qu'**une partie supérieure en élastomère (12a, 12b) est moulée sur le câble unique (1), laquelle assure l'étanchéité en interaction avec l'accès de la boîte à bornes (3), côté entrée, afin d'étanchéifier la boîte à bornes (3, 8).

14. Dispositif de raccordement selon une des revendications 8 à 13, **caractérisé en ce que** la boîte à bornes (3) est isolée de l'extérieur par un joint périphérique (15), entre le socle de la boîte à bornes (3.1) et le couvercle de la boîte à bornes (8).

15. Dispositif de raccordement selon une des revendications 8 à 14, **caractérisé en ce que** la boîte à bornes (3) avec ses composants (3.1 et 8) est constituée d'aluminium moulé sous pression ou de zinc moulé sous pression.
